# EUROPÄISCHE PATENTANMELDUNG

(11) **EP 3 034 892 A1**
(43) Veröffentlichungstag der Anmeldung: **22.06.2016**
(21) Anmeldenummer: 15200020.4
(22) Anmeldetag: 15.12.2015
(51) Int. Cl.: F16B 11/00, C22C 47/12, B29C 35/12

(54) **VERFAHREN UND VORRICHTUNG ZUR VERBINDUNG VON FASERWERKSTOFFEN MIT METALLWERKSTOFFEN**

(30) Priorität: 16.12.2014 DE 102014118747
(71) Anmelder: Universität Stuttgart, 70174 Stuttgart (DE)
(72) Erfinder: Seyboldt, Christoph, 70190 Stuttgart (DE); Riedmüller, Kim Rouven, 71665 Vaihingen-Enz (DE); Marx, Lukas, 71067 Sindelfingen (DE); Liewald, Prof. Dr. Dr. Mathias, 71384 Weinstadt (DE)
(74) Vertreter: Schmid, Wolfgang

(57) **Zusammenfassung**

Bei einem Verfahren zur Verbindung eines einen Faserwerkstoff aufweisenden Bauteils (2) mit einem einen Metallwerkstoff aufweisenden Bauteil (3) werden beiderseits der freiliegenden Fasern (5) des den Faserwerkstoff aufweisenden Bauteils (2) jeweilige den Metallwerkstoff aufweisende Bauteile (3,4) angeordnet. Wenigstens eines der den Metallwerkstoff aufweisenden Bauteile (3,4) wird derart erwärmt, dass es zumindest in einem geringen Maß aufschmilzt. Der teilweise aufgeschmolzene Metallwerkstoff umschließt die Fasern (5) des Faserwerkstoffs zumindest partiell.

## Beschreibung

Die Erfindung betrifft ein Verfahren zur Verbindung eines einen Faserwerkstoff aufweisenden Bauteils mit einem einen Metallwerkstoff aufweisenden Bauteil. Des Weiteren betrifft die Erfindung eine Vorrichtung zur Durchführung des Verfahrens.

Der Trend zur Leichtbauweise im Automobilbau trägt durch die daraus resultierende Schadstoffreduktion und die Schonung natürlicher Ressourcen einen großen Anteil zum Schutz unserer Umwelt bei. Gleichzeitig bedeutet diese Entwicklung aber einen Mehraufwand für die Fahrzeughersteller, da neuartige Werkstoffe und Werkstoffkombinationen die Entwicklung geeigneter Fertigungs- und Verarbeitungstechnologien erfordern. Beispielsweise setzen die immer häufiger eingesetzten Kombinationen aus Metallwerkstoffen mit Faserwerkstoffen, wie beispielsweise CFK, geeignete Fügeverfahren voraus.

Gemäß dem allgemein bekannten Stand der Technik werden zum Verbinden von Bauteilen aus Faserwerkstoffen bzw. Faserwerkstoffen aufweisenden Bauteilen mit Bauteilen aus Metallwerkstoffen bzw. Metallwerkstoffen aufweisenden Bauteilen hauptsächlich form- und kraftschlüssige Verbindungstechniken eingesetzt. Allerdings sind traditionelle Verbindungstechniken, die formschlüssige Verbindungselemente, wie zum Beispiel Nieten oder Schrauben, nutzen, bei Faserwerkstoffen aufgrund der daraus resultierenden Spannungsspitzen und der Schädigung der die Hauptlast tragenden Fasern nur eingeschränkt einsetzbar.

Aus dem allgemeinen Stand der Technik sind außerdem verschiedene Klebeverfahren zur Verbindung von Faserwerkstoffen mit Metallwerkstoffen bekannt. Das Kleben ist allerdings mit dem Nachteil einer notwendigen Vorbehandlung der Klebeflächen verbunden, um Kontaminationen der Oberfläche zu beseitigen. Hierzu werden häufig Trenn- und Schmiermittel eingesetzt. Die dabei zum Einsatz kommenden Reinigungsverfahren sind im Falle einer manuellen Durchführung häufig ineffizient und bei automatisierten Prozessen mit hohen Investitionskosten verbunden. Aufgrund der nötigen Aushärtung sind Klebeverbindungen außerdem zeitintensiv und unterliegen grundsätzlich einer Alterung.

In der DE 10 2009 048 709 A1 ist ein Verbundbauteil aus Metall- und Faserverbundwerkstoff sowie ein Verfahren zur Herstellung desselben beschrieben. Dabei wird durch Gießen mit anschließendem Erstarren des Metalls in einer Verbindungszone eine stoffschlüssige Verbindung des Metalls mit dem Faserverbundwerkstoff erzeugt. Für die Herstellung der Verbundbauteile sind Gießformen oder Schmiedegesenke mit definierten Bauteilgeometrien notwendig.

Aus der DE 10 2007 023 863 A1 ist eine Trimmvorrichtung für die Verwendung bei Skiern bekannt, bei der ein Torsionskasten aus faserverstärktem Kunststoff vorgesehen ist. Auch verschiedene gurtartige Tragschichten können aus faserverstärktem Kunststoff bestehen.

In der EP 1 835 044 A1 ist die Herstellung von Hybridbauteilen beschrieben, bei denen durch die Integration von Charakterisierungskomponenten eine Modifikation des Matrix-Werkstoffes erfolgt. Auch hier sind für die Herstellung der Verbundbauteile Gießformen oder Schmiedegesenke mit definierten Bauteilgeometrien notwendig.

Eine Temperiervorrichtung für Faserhalbzeuge ist in der EP 2 821 201 A1 beschrieben. Dabei wird mit Hilfe von Elektroden ein Stromfluss durch mehrere Faserhalbzeuglagen hindurch zur Temperierung derselben erzeugt.

Ein Verfahren zur Herstellung eines dreidimensionalen Formkörpers ist in der EP 2 743 292 A1 beschrieben. Dabei wird ein Halbzeug mit einer Frequenz zwischen 1 kHz und 300 GHz bestrahlt und diese Strahlung von den im Halbzeug enthaltenen thermoplastischen Fasern absorbiert. In einem zweiten Schritt wird das Halbzeug dreidimensional umgeformt.

Aus "Ultraschallpunktschweißen von Aluminiumblech/C-Faser-Kunststoff-Verbunden" von F. Balle, G. Wagner, D. Eifler in Materialwissenschaft und Werkstofftechnik 2007, 38, No. 11, Wiley-VCH Verlag GmbH & Co. KGaA ist es bekannt, in einem ersten Schritt mittels Ultraschallwellen die Matrix eines CFK-Werkstoffs in einem Fügebereich zu plastifizieren und aus der Schweißzone zu verdrängen. Die lasttragenden C-Fasern des CFK werden freigelegt und können in einem zweiten Schritt direkt mit dem metallischen Fügepartner mittels Ultraschall verschweißt werden.

Die EP 1 685 263 B1 beschreibt ein Verfahren zur Herstellung eines Bauteils aus einem Verbundwerkstoff mit einem metallischen Matrixwerkstoff, der durch eingelagerte Fasern oder Partikel verstärkt ist. Dabei wird ein Halbzeug hergestellt, in dem die Fasern oder Partikel und der metallische Matrixwerkstoff enthalten sind, und das Halbzeug wird in einem Werkzeug bei einer Temperatur oberhalb der Solidustemperatur und unterhalb der Liquidustemperatur des metallischen Matrixwerkstoffes thixoumgeformt.

In "Recent developments for laser beam joining of CFRP-aluminum structures" von P. Woizeschke und V. Wottschel, erschienen in Procedia Materials Science 2 (2013) 250 - 258, wird die Verbindung von Faserwerkstoffen mit Aluminiumwerkstoffen mittels Laserstrahlschweißen beschrieben.

Die meisten dieser bekannten Verfahren sind sehr aufwändig auszuführen, häufig nicht ausgereift und führen teilweise zu unbefriedigenden Ergebnissen hinsichtlich der Festigkeit der Verbindung.

Es ist daher Aufgabe der vorliegenden Erfindung, ein Verfahren und eine Vorrichtung zur Verbindung von Faserwerkstoffen mit Metallwerkstoffen zu schaffen, die mit geringem Aufwand auszuführen sind und eine sichere und feste Verbindung der beteiligten Bauteile gewährleisten.

Erfindungsgemäß wird diese Aufgabe durch die in Anspruch 1 genannten Merkmale gelöst.

Durch die erfindungsgemäße Erwärmung wenigstens eines der den Metallwerkstoff aufweisenden Bauteile schmilzt dasselbe zumindest derart auf, dass der aufgeschmolzene Metallwerkstoff die Fasern des Faserwerkstoffs zumindest partiell umschließt und damit eine Verbindung zwischen dem Metallwerkstoff und den Fasern des Faserwerkstoffs herstellt. Dadurch ist eine stoffschlüssige Verbindung zwischen dem Faserwerkstoff und dem Metallwerkstoff ohne Verwendung eines zusätzlichen Flussmittels oder Verbindungselements möglich. Auf diese Weise entsteht nicht nur eine sehr zuverlässige Verbindung der Bauteile, sondern das Verfahren kann auch auf einfache und kostengünstige Art und Weise ausgeführt werden.

Die mit dem erfindungsgemäßen Verfahren erzielte stoffschlüssige Verbindung führt zu guten mechanischen Eigenschaften der dabei hergestellten Verbundwerkstoffe. Ein weiterer Vorteil des erfindungsgemäßen Verfahrens besteht darin, dass bei dem Fügevorgang selbst keine schädliche Umweltbelastung entsteht.

Bei dem einen, den Metallwerkstoff aufweisenden Bauteil kann es sich dabei um ein Strukturbauteil beispielsweise in einem Kraftfahrzeug handeln, das in einem Verbindungsbereich mit einem ebenfalls möglicherweise als Strukturteil eines Kraftfahrzeugs ausgebildeten, den Faserwerkstoff aufweisenden Bauteil verbunden werden kann, wohingegen das zweite, den Metallwerkstoff aufweisenden Bauteil lediglich dazu dient, die Verbindung zwischen den beiden anderen Bauteilen herzustellen, indem es mit dem anderen den Metallwerkstoff aufweisenden Bauteil eine Verbindung eingeht und den Faserwerkstoff zwischen diesen beiden metallischen Bauteilen einschließt. Die sich dabei ergebende Fügestelle in dem Verbindungsbereich kann die unterschiedlichsten Formen aufweisen, wie zum Beispiel punkt- oder linienförmig.

Um eine noch bessere Verbindung der den Metallwerkstoff aufweisenden Bauteile mit dem den Faserwerkstoff aufweisenden Bauteil zu erreichen, kann in einer sehr vorteilhaften Weiterbildung der Erfindung vorgesehen sein, dass die beiden den Metallwerkstoff aufweisenden Bauteile beim und/oder nach dem Erwärmen gegeneinander gepresst werden. Auf diese Weise lässt sich außerdem ein verbesserter Infiltrationsgrad des Metallwerkstoffs in die Fasern erreichen.

Eine weitere vorteilhafte Ausgestaltung der Erfindung kann darin bestehen, dass wenigstens eines der beiden den Metallwerkstoff aufweisenden Bauteile in einen Temperaturbereich unwesentlich oberhalb der Soliduslinie des Metallwerkstoffs erwärmt wird. Da hierbei die metallischen Fügepartner im Gegensatz zu anderen Verfahren, wie beispielsweise dem Schweißen, nur bis knapp oberhalb der Soliduslinie erwärmt werden, stellt das erfindungsgemäße Verfahren eine energieeffiziente Alternative zum Fügen von metallischen Werkstoffen mit Faserwerkstoffen dar.

Eine gleichermaßen zuverlässige wie einfache Möglichkeit zur Erwärmung der beiden den Metallwerkstoff aufweisenden Bauteile kann darin bestehen, dass wenigstens eines der beiden den Metallwerkstoff aufweisenden Bauteile durch Beaufschlagung desselben mit elektrischem Strom erwärmt wird.

Um dabei eine möglichst gute Stromleitung zwischen den beteiligten Bauteilen zu erreichen, kann des Weiteren vorgesehen sein, dass ein Faserwerkstoff mit elektrischen Strom leitenden Fasern verwendet wird.

Wenn die Fasern des Faserwerkstoffs vor dem Erwärmen in einer Kunststoffmatrix eingebettet werden, wobei die Fasern des Faserwerkstoffs vor dem Erwärmen freigelegt werden, so lässt sich insbesondere bei größeren Bauteilen eine einfache Handhabung derselben erreichen.

Alternativ dazu kann auch vorgesehen sein, dass die Fasern des Faserwerkstoffs nach dem Erwärmen in einer Kunststoffmatrix eingebettet werden. Bei der nachträglichen Einbettung der Fasern in eine Kunststoffmatrix kann zusätzlich auch das den Metallwerkstoff aufweisende Bauteil in die Kunststoffmatrix eingebettet werden, wodurch sich ein wesentlich verbesserter Korrosionsschutz ergibt.

Eine Vorrichtung zur Durchführung des erfindungsgemäßen Verfahrens ist in Anspruch 8 angegeben. Mit dieser Vorrichtung lässt sich das erfindungsgemäße Verfahren auf einfache und zuverlässige Art und Weise ausführen.

Wenn dabei die Einrichtung zum Erwärmen der beiden den Metallwerkstoff aufweisenden Bauteile als Einrichtung zum Beaufschlagen der beiden den Metallwerkstoff aufweisenden Bauteile mit elektrischem Strom ausgebildet ist, so wird eine sehr einfache, zuverlässige und schnelle Erwärmung der den Metallwerkstoff aufweisenden Bauteile erreicht.

Des Weiteren kann vorgesehen sein, dass die Einrichtung zum Beaufschlagen der beiden den Metallwerkstoff aufweisenden Bauteile wenigstens zwei Elektroden aufweist. Durch die Verwendung zweier Elektroden zur Erwärmung der beiden den Metallwerkstoff aufweisenden Bauteile kann die Erwärmung sehr gezielt in die gewünschten Bereiche eingebracht werden.

Nachfolgend ist ein Ausführungsbeispiel der Erfindung anhand der Zeichnung prinzipmäßig dargestellt.

Es zeigt:
- Fig. 1: eine erfindungsgemäße Vorrichtung zur Durchführung des erfindungsgemäßen Verfahrens zur Verbindung des den Faserwerkstoff aufweisenden Bauteils mit dem den Metallwerkstoff aufweisenden Bauteil; und
- Fig. 2: eine mit dem erfindungsgemäßen Verfahren hergestellte Verbindung zwischen den Bauteilen aus Fig. 1.

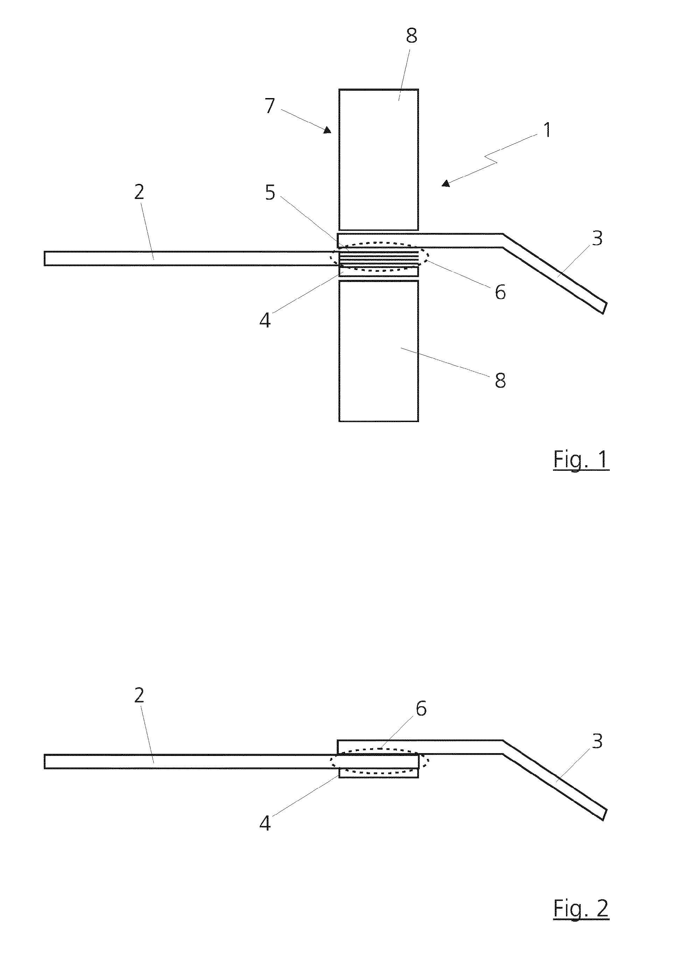

Fig. 1 zeigt eine Vorrichtung 1, mit der ein nachfolgend ausführlich beschriebenes Verfahren durchgeführt werden kann. Zur Durchführung des Verfahrens sind grundsätzlich auch andere Vorrichtungen geeignet, die teilweise ebenfalls beschrieben oder zumindest angedeutet werden.

Bei dem Verfahren wird ein erstes Bauteil 2, das einen Faserwerkstoff aufweist, mit einem zweiten Bauteil 3 verbunden, das einen Metallwerkstoff aufweist. Hierzu wird ein drittes Bauteil 4 eingesetzt, das ebenfalls einen Metallwerkstoff aufweist. Zur Vereinfachung wird das den Faserwerkstoff aufweisende Bauteil 2 nachfolgend kurz als erstes Bauteil 2 bezeichnet und die beiden den Metallwerkstoff aufweisenden Bauteile 3, 4 werden nachfolgend kurz als zweites bzw. drittes Bauteil 3 bzw. 4 bezeichnet. Grundsätzlich kann das erste Bauteil 2 teilweise oder vollständig aus dem Faserwerkstoff bestehen. In ähnlicher Weise können sowohl das zweite Bauteil 3 als auch das dritte Bauteil 4 teilweise oder vollständig aus dem Metallwerkstoff bestehen.

Bei dem ersten Bauteil 2 handelt es sich im vorliegenden Fall um ein Karosseriebauteil einer Karosserie eines Kraftfahrzeugs, wohingegen das zweite Bauteil 3 als Dach des Kraftfahrzeugs ausgeführt ist. Das dritte Bauteil 4 ist ein zusätzliches Bauteil, das lediglich zur Verbindung des ersten Bauteils 2 mit dem zweiten Bauteil 3 vorgesehen ist. In einer weiteren, nicht dargestellten Ausführungsform wäre es zum Beispiel möglich, einen aus einem Metallwerkstoff bestehenden Schweller mit einer aus einem Faserwerkstoff bestehenden oder einen Faserwerkstoff aufweisenden Bodenstruktur eines Kraftfahrzeugs zu verbinden. Grundsätzlich können mit dem nachfolgend beschriebenen Verfahren die unterschiedlichsten Bauteile aus Faserwerkstoffen bzw. Metallwerkstoffen miteinander verbunden werden. Dabei sind auch vollkommen andere Ausführungsformen denkbar, die nicht notwendigerweise im Bereich des Automobilbaus angesiedelt sein müssen.

Zur Durchführung des Verfahrens werden zunächst einzelne Fasern 5 des ersten Bauteils 2 freigelegt oder das erste Bauteil 2 ist so ausgeführt, dass es lediglich eine oder mehrere Schichten der Fasern 5 aufweist, sodass die Fasern 5 nicht freigelegt werden müssen. Beiderseits der freiliegenden Fasern 5 des ersten Bauteils 2 werden die beiden den Metallwerkstoff aufweisenden Bauteile 3 und 4 angeordnet. Anschließend wird wenigstens eines der Bauteile 3 oder 4 derart erwärmt, dass es zumindest in einem geringen Maß aufschmilzt. Der zumindest teilweise aufgeschmolzene Metallwerkstoff des erwärmten Bauteils 3 und/oder 4 umschließt dann die Fasern 5 des Faserwerkstoffs des ersten Bauteils 2 zumindest partiell und sorgt für eine Verbindung der Fasern 5 mit dem aufgeschmolzenen Bauteil 3 und/oder 4 in einer Fügezone bzw. einem Verbindungsbereich 6. Da das dritte Bauteil 4, wie oben erwähnt, nur ein Hilfsmittel zur Herstellung der Verbindung zwischen dem ersten Bauteil 2 und dem zweiten Bauteil 3 ist, kann die Größe desselben auf die Größe des Verbindungsbereichs 6 zwischen den beiden Bauteilen 2 und 3 beschränkt sein, so dass sich nur eine geringfügige Gewichtserhöhung durch das dritte Bauteil 4 ergibt. Grundsätzlich könnte das dritte Bauteil 4 auch einteilig mit dem zweiten Bauteil 3 ausgeführt sein und zum Beispiel eine U-förmige Aufnahme für das erste Bauteil 2 bilden. Die sich dabei ergebende Fügestelle in dem Verbindungsbereich 6 kann die unterschiedlichsten Formen aufweisen, wie zum Beispiel punkt- oder linienförmig.

Im vorliegenden Fall werden beide den Metallwerkstoff aufweisenden Bauteile 3 und 4 erwärmt. Hierzu wird eine Einrichtung 7 zum Erwärmen wenigstens eines der beiden den Metallwerkstoff aufweisenden Bauteile 3 und/oder 4 eingesetzt. Vorzugsweise ist die Einrichtung 7 als Einrichtung zum Beaufschlagen der beiden Bauteile 3 und 4 mit elektrischem Strom ausgebildet. Konkret weist die Einrichtung 7 zwei mit elektrischem Strom beaufschlagbare Elektroden 8 auf, die einander gegenüberliegend beiderseits der Bauteile 3 und 4 angeordnet sind und mit denen ein elektrischer Strom an die beiden Bauteile 3 und 4 angelegt wird. Aufgrund ihres elektrischen Widerstands erwärmen sich die Bauteile 3 und 4 beim Anlegen von elektrischem Strom. Die Elektroden 8 sind so ausgeführt, dass mit denselben nicht nur eine Erwärmung der beiden Bauteile 3 und 4 möglich ist, sondern auch ein Druck bzw. eine Kraft auf die beiden Bauteile 3 und 4 ausgeübt werden kann, um diese beim und/oder nach dem Erwärmen miteinander zu verpressen. Dadurch wird eine noch bessere Verbindung des geschmolzenen Metallwerkstoffs mit den Fasern 5 des Faserwerkstoffs erreicht. Die auf die beiden Bauteile 3 und 4 aufgebrachte Kraft sollte dabei so gewählt werden, dass sich der Metallwerkstoff nicht aus dem Verbindungsbereich 6 entfernt.

Es ergibt sich damit ein Stoffschluss zwischen dem Metallwerkstoff des zweiten und dritten Bauteils 3 und 4 und den Fasern 5 des Faserwerkstoffs des ersten Bauteils 2. Ein weiterer Stoffschluss ergibt sich zwischen den Metallwerkstoffen der beiden Bauteile 3 und 4. Hierbei können sowohl einzelne Fasern 5 als auch einzelne, nicht dargestellte Faserbündel von dem Metallwerkstoff des zweiten und dritten Bauteils 3 und 4 umschlossen bzw. infiltriert sein.

Vorzugsweise wird die Erwärmung so durchgeführt, dass wenigstens eines, im vorliegenden Fall beide Bauteile 3 und 4 in einen Temperaturbereich unwesentlich oberhalb der Soliduslinie des Metallwerkstoffs erwärmt werden. Die Erwärmungstemperatur des zweiten Bauteils 3 und/oder des dritten Bauteils 4 hängt selbstverständlich von der Materialzusammensetzung derselben ab. Dasselbe gilt auch für den "Abstand" der Erwärmungstemperatur von der Soliduslinie des Materials, da der Temperaturbereich, in dem ein prozesssicheres Aufschmelzen des Metallwerkstoffs zur Erzielung einer festen Verbindung zwischen dem ersten Bauteil 2 und den beiden Bauteilen 3 und 4 stattfinden kann, von den Werkstoffeigenschaften abhängt und unterschiedlich groß sein kann. Da das Verhalten bestimmter Werkstoffe bzw. Legierungen bei Überschreiten der Soliduslinie dem Fachmann bekannt ist, kann zur korrekten Einstellung der Erwärmungstemperatur für den jeweiligen Werkstoff bzw. die jeweilige Legierung auf das Fachwissen zurückgegriffen werden. Die Regelung bzw. Steuerung der gewünschten Erwärmungstemperatur kann über die angelegte Spannung, die Stromstärke und/oder die Zeit, in der die Elektroden 8 mit Strom beaufschlagt sind, erfolgen. Die Verfahrensparamater können zusätzlich zu dem Metallwerkstoff auch in Abhängigkeit von der Dicke der beiden Bauteile 3 und 4 sowie von der Art des verwendeten Faserwerkstoffs eingestellt bzw. angepasst werden.

Nach dem Verbinden können die Fasern 5 des Faserwerkstoffs des ersten Bauteils 2 in einer nicht dargestellten Kunststoffmatrix eingebettet werden. Alternativ dazu ist es, wie bereits oben erwähnt, auch möglich, die Fasern 5 des Faserwerkstoffs des ersten Bauteils 2 vor dem Erwärmen in einer Kunststoffmatrix einzubetten und lediglich die sich in dem Verbindungsbereich befindenden Fasern 5 des Faserwerkstoffs vor dem Erwärmen freizulegen, um die Verbindung derselben über die beiden Bauteile 3 und 4 zu ermöglichen. Durch dieses Freilegen der Fasern 5 wird verhindert, dass sich in dem Verbindungsbereich 6 des ersten Bauteils 2 mit dem zweiten Bauteil 3 das Material der Kunststoffmatrix des ersten Bauteils 2 befindet.

Die oben erwähnte Erwärmung lediglich eines der beiden Bauteile 3 oder 4 ist beispielsweise dann zu bevorzugen, wenn die beiden Metallwerkstoffe der Bauteile 3 und 4 sehr unterschiedliche Schmelztemperaturen aufweisen, wie dies beispielsweise bei der Verwendung von Aluminium einerseits und Stahl andererseits der Fall ist. In diesem Fall wird lediglich das den Aluminiumwerkstoff aufweisende bzw. aus dem Aluminiumwerkstoff bestehende Bauteil 3 oder 4 erwärmt und zumindest teilweise aufgeschmolzen, so dass sich der aufgeschmolzene Aluminiumwerkstoff mit den Fasern 5 des Faserwerkstoffs des ersten Bauteils 2 verbindet. Zwischen dem aufgeschmolzenen Aluminium des zweiten oder dritten Bauteils 3 oder 4 und dem Stahlwerkstoff des dritten oder zweiten Bauteils 4 oder 3 entstehen dabei intermetallische Phasen, die zu einer Verbindung der beiden Bauteile 3 und 4 miteinander führen können.

Wenn die beiden Bauteile 3 und 4 denselben oder zumindest einen sehr ähnlichen Metallwerkstoff aufweisen, ist es zu bevorzugen, beide Bauteile 3 und 4 zu erwärmen, da sich auf diese Weise eine bessere Verbindung zwischen den beiden Bauteilen 3 und 4 und damit auch eine verbesserte Verbindung zwischen den Bauteilen 3 und 4 einerseits und dem ersten Bauteil 2 andererseits ergibt.

Zumindest einige der Fasern 5 des Faserwerkstoffs des ersten Bauteils 2 sind stromleitend, so dass von der einen Elektrode 8 über das zweite Bauteil 3, das erste Bauteil 2 und das dritte Bauteil 4 zu der anderen Elektrode 8 ein geschlossener Stromkreis entsteht. Beispielsweise kann es sich bei den Fasern 5 um Kohlenstofffasern handeln.

Im vorliegenden Fall sind die Elektroden 8 im Querschnitt rund ausgebildet und können damit zur Verbindung der Bauteile 2, 3 und 4 in einem bestimmten, begrenzten Bereich, nämlich dem Verbindungsbereich 6, eingesetzt werden. Das zweite und/oder dritte Bauteil 3 und/oder 4 wird dadurch lediglich in dem Verbindungsbereich 6 erwärmt. Selbstverständlich können die Elektroden 8 auch andere Formen und/oder Größen aufweisen, insbesondere in Abhängigkeit von der Form der Fügestelle bzw. des Verbindungsbereichs 6. Grundsätzlich wäre es auch möglich, die Elektroden 8 in Rollenform auszuführen, um damit eine linienförmige oder, bei entsprechendem Verfahrweg der Elektroden 8, eine flächige Verbindung der Bauteile 2, 3 und 4 miteinander zu erreichen. Des Weiteren wäre auch eine Erwärmung des zweiten und/oder dritten Bauteils 3 und/oder 4 mittels magnetischer Induktion denkbar.

Im vorliegenden Fall ist lediglich eine Schicht des Faserwerkstoffs dargestellt. Selbstverständlich kann das erste Bauteil 2 jedoch mehrere der Schichten des Faserwerkstoffs aufweisen, was in den meisten Anwendungsfällen zu bevorzugen ist. Des Weiteren ist es möglich, zwischen eine oder mehrere Schichten des Faserwerkstoffs zusätzliche, einen Metallwerkstoff aufweisende Bauteile einzulegen, um auch in Zwischenbereichen eine gute Verbindung zwischen dem Faserwerkstoff und dem Metallwerkstoff zu erzielen. Gegebenenfalls kann es dabei sinnvoll sein, eines der beiden Bauteile 3 oder 4, insbesondere das dritte Bauteil 4, oder auch beide Bauteile 3 und 4 mit einer größeren Materialstärke auszuführen, um mehr Material zum Umschließen der Fasern 5 des Faserwerkstoffs des ersten Bauteils 2 zur Verfügung zu stellen.

## Patentansprüche

1. Verfahren zur Verbindung eines einen Faserwerkstoff aufweisenden Bauteils (2) mit einem einen Metallwerkstoff aufweisenden Bauteil (3),
**dadurch gekennzeichnet, dass**
beiderseits der freiliegenden Fasern (5) des den Faserwerkstoff aufweisenden Bauteils (2) jeweilige den Metallwerkstoff aufweisende Bauteile (3,4) angeordnet werden, und dass wenigstens eines der den Metallwerkstoff aufweisenden Bauteile (3,4) derart erwärmt wird, dass es zumindest in einem geringen Maß aufschmilzt, wobei der teilweise aufgeschmolzene Metallwerkstoff die Fasern (5) des Faserwerkstoffs zumindest partiell umschließt.

2. Verfahren nach Anspruch 1,
**dadurch gekennzeichnet, dass**
die beiden den Metallwerkstoff aufweisenden Bauteile (3,4) beim und/oder nach dem Erwärmen gegeneinander gepresst werden.

3. Verfahren nach Anspruch 1 oder 2,
**dadurch gekennzeichnet, dass**
wenigstens eines der beiden den Metallwerkstoff aufweisenden Bauteile (3,4) in einen Temperaturbereich unwesentlich oberhalb der Soliduslinie des Metallwerkstoffs erwärmt wird.

4. Verfahren nach Anspruch 1, 2 oder 3,
**dadurch gekennzeichnet, dass**
wenigstens eines der beiden den Metallwerkstoff aufweisenden Bauteile (3,4) durch Beaufschlagung desselben mit elektrischem Strom erwärmt wird.

5. Verfahren nach Anspruch 4,
**dadurch gekennzeichnet, dass**
ein Faserwerkstoff mit elektrischen Strom leitenden Fasern (5) verwendet wird.

6. Verfahren nach einem der Ansprüche 1 bis 5,
**dadurch gekennzeichnet, dass**
die Fasern (5) des Faserwerkstoffs vor dem Erwärmen in einer Kunststoffmatrix eingebettet werden, wobei die Fasern (5) des Faserwerkstoffs vor dem Erwärmen freigelegt werden.

7. Verfahren nach einem der Ansprüche 1 bis 5,
**dadurch gekennzeichnet, dass**
die Fasern (5) des Faserwerkstoffs nach dem Erwärmen in einer Kunststoffmatrix eingebettet werden.

8. Vorrichtung zur Durchführung des Verfahrens nach einem der Ansprüche 1 bis 7, mit einer Einrichtung (7) zum Erwärmen wenigstens eines der beiden den Metallwerkstoff aufweisenden Bauteile (3,4).

9. Vorrichtung nach Anspruch 8,
**dadurch gekennzeichnet, dass**
die Einrichtung (7) zum Erwärmen der beiden den Metallwerkstoff aufweisenden Bauteile (3,4) als Einrichtung (7) zum Beaufschlagen der beiden den Metallwerkstoff aufweisenden Bauteile (3,4) mit elektrischem Strom ausgebildet ist.

10. Vorrichtung nach Anspruch 9,
**dadurch gekennzeichnet, dass**
die Einrichtung (7) zum Beaufschlagen der beiden den Metallwerkstoff aufweisenden Bauteile (3,4) wenigstens zwei Elektroden (8) aufweist.
